Europäisches Patentamt

European Patent Office

Office européen des brevets

(19)

(11) Publication number: 0 069 539
A1

(12)                    EUROPEAN PATENT APPLICATION

(21) Application number: 82303455.8                (51) Int. Cl.³: B 29 D 3/02

(22) Date of filing: 01.07.82

(30) Priority: 04.07.81 GB 8120740

(43) Date of publication of application:
12.01.83 Bulletin 83/2

(84) Designated Contracting States:
DE FR GB IT NL SE

(71) Applicant: The British Petroleum Company p.l.c.
Britannic House Moor Lane
London EC2Y 9BU(GB)

(72) Inventor: Thomas, Alan Huw
British Petroleum Company p.l.c. Chertsey Road
Sunbury-on-Thames Middlesex, TW16 7LN(GB)

(74) Representative: Dodding, Robert Anthony et al,
BP International Limited Patents and Licensing Division
Chertsey Road
Sunbury-on-Thames Middlesex, TW16 7LN(GB)

(54) Structural components.

(57) A method of fabricating structural components compris-
ing attaching a continuous resin wetted fibre to a mould. The
mould is then rotated so as to wind the fibre into recesses of
a pre-determined shape in the mould. The resin is allowed to
cure so as to form a channel cross section structure.

FIG.1(a)        FIG.1(b)

1

## STRUCTURAL COMPONENTS

The present invention relates to structural components and more particularly relates to structural components made from resin wetted fibres.

The production of structural components such as parts of buildings, boats etc. by the technique of laying up resin wetted fibre glass in a mould is well known. However, this is a relatively labour intensive and time consuming process and further an extra step is required if it is necessary to inter-connect separate components.

Thus, according to the present invention there is provided a method of fabricating structural components comprising (a) attaching a continuous resin wetted fibre to a mould (b) rotating the mould (c) winding the fibre into recesses of a pre-determined shape in the mould and (d) allowing the resin to cure.

The mould is preferably removable from the cured structure and a mould release agent may be used to facilitate separation of the component from the mould.

In one example the mould comprises two flat facing pieces of wood with a circumferential insert between to define the mould.

The rotation of the mould may be achieved by use, for example, of a motor driven shaft or alternatively manual rotation may be used.

Suitable materials for the manufacture of the structure described above are glass fibre or textile , roving or strands wetted with organic or chemical glues, paints, plastic materials, polythene, epoxy, urethanes, water glass mixed with cement, magnesium oxychloride, polyester resins and other kinds of plastics.

The invention will now be described by way of example only with reference to the accompanying drawings.

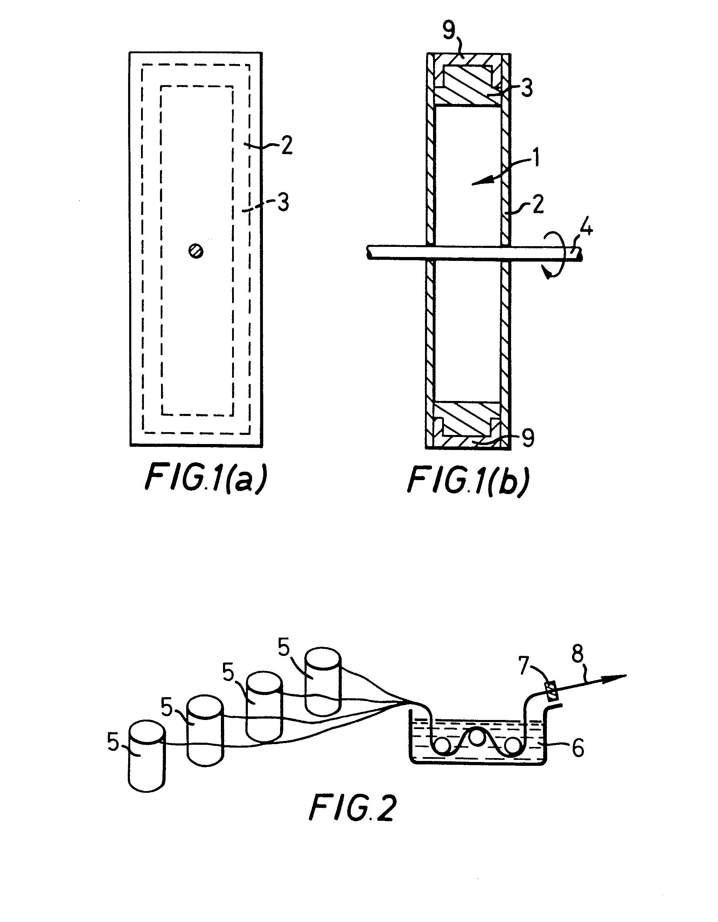

Figures 1(a) and 1(b) show two sections at right angles of a typical jig for winding channel section structural components.

The jig 1 comprises a pair of rectangular wooden sheets 2 placed parallel to each other and maintained at a distance of about 3 inches apart by a circumferential insert 3 which is bolted to each of the wooden sheets 2. A rotatable shaft 4 passes centrally through and at right angles to the plane of the sheets 2 and is connected to a motor adapted to rotate typically at 60 rpm. The shape of the insert 3 is determined by the type of structural component to be formed but in the example it has a recess 9 of square U-shape to form the channel section component.

Figure 2 shows the method of producing the resin wetted fibres. The continuous wetted fibre was produced by passing four continuous bundles 5 of glass fibres together through a bath 6 of polyester resin and then through an orifice plate 7 to give a roughly uniform fibre diameter. The glass fibre rovings used were Vetrotex (EC 14,2400 Tex) produced by St Gobain Industries and each bundle contained about 208 fibres of about 10 microns diameter. The polyester resin used was Cellobond A 2785 CV (BP Chemicals Limited) with a catalyst and accelerator. The formulations were chosen so that easy wetting of the fibre occurred but with sufficient wetting to reduce run off tendency.

During use, the wetted continuous fibre 8 from the resin bath 6 was fastened to the insert 3 of the jig. The jig 1 was then rotated and the wetted fibre 8 passed into the recess 9 of the insert 3. Rotation was continued until the wetted fibre 8 filled the recess 9 of the insert 3. At this stage the outer surface of the resin wetted fibres may be smoothed off by use of a wooden block or the like. The resin was then allowed to cure at room temperature for several hours dependent upon the formulation adopted.

The wooden sheets 2 were then removed along with the inserts 3 to leave a channel cross-section structure. The sheets and insert were initially coated with a suitable mould release agent to facilitate ease of separation of the cured structure. When making closed channel section structures, the insert is made in several pieces to enable ease of removal after curing.

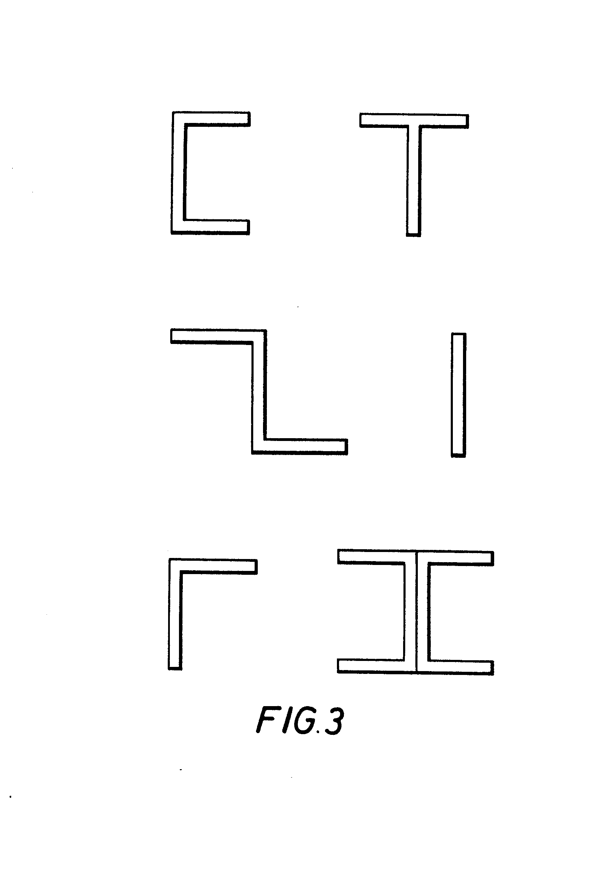

Figure 3 illustrates typical sections of structures which may be achieved by changing the shape of the insert.

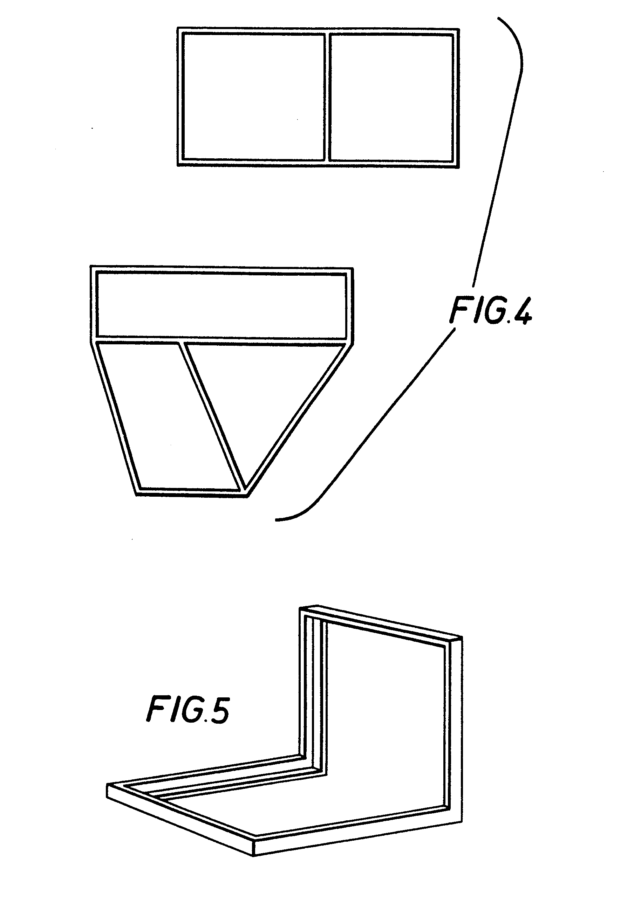

Figure 4 shows further structures which may be fabricated by placing two or more uncured or cured closed structures adjacent to each other and then rotating them and winding further resin wetted continuous fibres around the periphery, the further structure being subsequently allowed to cure. Also three dimensional structures may be produced in this way be winding resin wetted fibres around, say, two structures set at right angles.

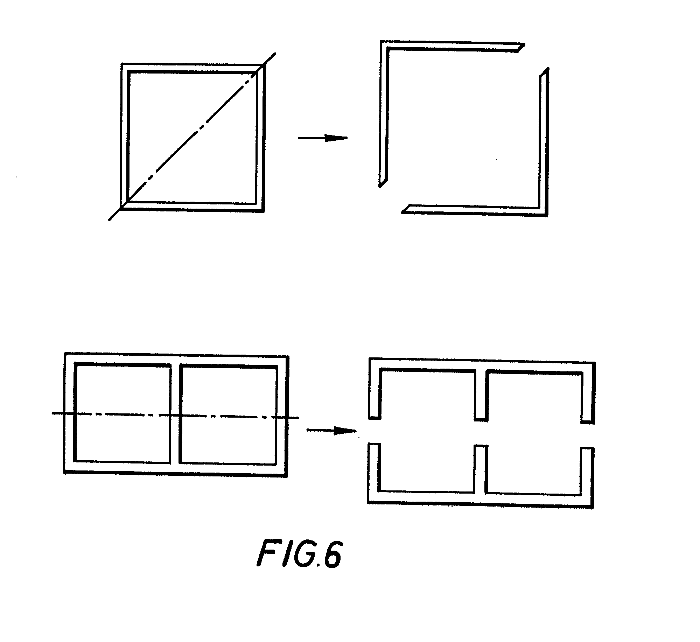

After the structure has been wound and cured, the structure may be divided along a line of symmetry to form two or more identical structures. Some examples of this are shown in Figure 6.

0069539

Claims:

1.    A method of fabricating structural components comprising (a)
      attaching a continuous resin wetted fibre to a mould (b) rotating
      the mould (c) winding the fibre into recesses of a pre-determined
      shape in the mould and (d) allowing the resin to cure.

2.    A method according to claim 1 in which the mould is removable from
      the cured structure.

3.    A method according to claim 2 in which the mould is coated with a
      release agent prior to the introduction of the continuous resin
      wetted fibre.

4.    A method according to any one of claims 1 to 3 in which the mould
      comprises flat facing members spaced apart with a circumferential
      insert of pre-determined shape.

5.    A method according to claim 4 in which the mould is fabricated from
      wood.

6.    A method according to any one of the preceding claims in which the
      mould is rotated by a motor driven shaft.

7.    A method according to any one of claims 4 to 6 in which the pre-
      determined shape of the mould is a channel or U-shaped
      cross-section.

8.    A method according to any one of the preceding claims in which two
      or more cured or uncured structures are placed adjacent to each
      other and rotated, further resin wetted continous fibres being wound
      around the periphery to form a further structure, the further
      structure then being cured.

9.    A method according to claim 8 in which the cured further structure
      is divided along a line of symmetry to form two or more similar
      structures.

10. A method according to any one of the preceding claims in which the resin is a polyester resin, epoxy resin or an organic or chemical glue.

11. A method according to any one of the preceding claims in which the continuous fibre is glass fibre or a textile roving.

12. A method as hereinbefore described and with reference to Figures 1 to 6 of the accompanying drawings.

13. Structural components whenever fabricated according to any one of claims 1 to 12.

FIG.1(a)          FIG.1(b)

FIG.2

FIG.3

FIG.4

FIG.5

FIG.6

## EUROPEAN SEARCH REPORT

European Patent Office

Application number

EP 82303455.8

### DOCUMENTS CONSIDERED TO BE RELEVANT

| Category | Citation of document with indication, where appropriate, of relevant passages | Relevant to claim |
|---|---|---|
| X | FR - A1 - 2 405 802 (MESSER-SCHMITT-BOLKOW-BLOHM) <br> * Page 8, line 10 - page 9, line 15; fig. 3,4,5 *. <br> -- | 1,2,4, 10,11 |
| X | GB - A - 1 250 885 (ROLLS-ROYCE) <br> * Totality * <br> -- | 1,2 |
| X | GB - A - 1 561 710 (ENERGIE ATOMIQUE) <br> * Page 4, lines 29-96; fig. 3-6 * <br> ---- | 1,2,4, 10,11 |

**CLASSIFICATION OF THE APPLICATION (Int. Cl. 3)**

B 29 D 3/02

**TECHNICAL FIELDS SEARCHED (Int.Cl. 3)**

B 29 D 3/00
B 29 G 7/00
B 29 C 27/26

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | |
|---|---|
| X | The present search report has been drawn up for all claims |

| Place of search | Date of completion of the search | Examiner |
|---|---|---|
| VIENNA | 23-09-1982 | BAUMGARTNER |